# FASCICULE DE BREVET EUROPEEN

(11) **EP 0 960 049 B1**
(45) Date de publication et mention de la délivrance du brevet: **18.08.2004**
(21) Numéro de dépôt: 98956953.8
(22) Date de dépôt: 26.11.1998
(51) Int. Cl.: B64D 29/08, E05C 17/30, F16B 7/10

(54) **BIELLE TELESCOPIQUE D'OUVERTURE D'UN CAPOT MOBILE, NOTAMMENT DE NACELLE D'UN MOTEUR D'AVION**
TELESKOPISCHE ÖFFNUNGS- UND HALTESTANGE FÜR BEWEGBARE VERKLEIDUNGSHAUBEN, INSBESONDERE IN FLUGZEUGS-TRIEBWERKSGONDELN
TELESCOPIC ROD FOR OPENING A MOBILE COWL, IN PARTICULAR OF AN AIRCRAFT ENGINE BAY

(30) Priorité: 27.11.1997 FR 9714934
(43) Date de publication de la demande: 01.12.1999
(73) Titulaire: AIRBUS France, 31060 Toulouse Cedex 03 (FR)
(72) Inventeur: PORTE, Alain, F-31770 Colomiers (FR)
(74) Mandataire: Ilgart, Jean-Christophe
(86) Numéro de dépôt international: PCT/FR1998/002534
(87) Numéro de publication internationale: WO 1999/028187

(56) Documents cités:
- EP-A- 0 393 259
- WO-A-96/01064
- DE-A- 3 337 297
- US-A- 4 629 146
- US-A- 4 825 644
- US-A- 5 593 239

## Description

L'invention concerne un capot mobile comprenant une bielle télescopique d'ouverture de ce capot, notamment de nacelle d'un moteur d'avion.

Les moteurs d'avion sont enveloppés dans des nacelles dont certaines parties sont des capots mobiles pouvant s'ouvrir pour qu'on puisse accéder au moteur. De façon classique, ces capots ont des sections transversales en arc de cercle, sont articulés sur un mât solidaire de la voilure par leur bord supérieur et sont munis de moyens de verrouillage à leur bord inférieur afin de les maintenir normalement fermés. Le procédé d'ouverture consiste d'abord à défaire les moyens de verrouillage puis à soulever les capots à la main si leur poids leur permet ou par le déploiement de vérins prévus pour cela. Quand l'ouverture est achevée, des bielles sont installées entre le capot et le moteur maintenant exposé pour empêcher les capots de retomber. Ces bielles doivent être télescopiques, formées de tronçons coulissant les uns dans les autres et qu'on bloque en position de déploiement en commandant des systèmes de verrouillage : elles sont en effet gardées auparavant dans l'espace mitoyen entre le capot et le moteur, qui est trop exigu pour qu'on puisse les laisser à l'état déployé. Dans la conception connue jusqu'à présent, les bielles sont articulées par une extrémité au capot, à mi-hauteur environ de celui-ci, et l'autre extrémité se termine en une pince qui se referme sur une poignée du capot quand les bielles sont rangées. Le document US-A-4 629 146 en est une illustration.

Une fois que le capot est déverrouillé et soulevé, un opérateur doit donc détacher la pince de la bielle de la poignée du capot, puis tirer la bielle pour que ses tronçons se déploient, verrouiller mutuellement les tronçons quand leur déploiement est achevé et engager la pince dans une poignée fixée au moteur pour installer la bielle et garantir l'ouverture du capot. Ces opérations sont relativement lentes et l'opérateur ne peut évidemment rien faire d'autre pendant ce temps : si le capot n'est pas à ouverture motorisée (ce qu'on choisit généralement pour les capots légers afin de ne pas compliquer leur conception), il faut donc faire soulever le capot par au moins un autre opérateur pendant que le premier s'occupe de la bielle. Il en va de même quand le capot doit être refermé. L'emploi de plusieurs opérateurs pour des opérations aussi simples est regrettable.

L'objet de l'invention est donc d'accomplir la totalité des opérations d'ouverture d'un capot mobile de nacelle d'un moteur d'avion par un opérateur unique grâce à une conception nouvelle de la bielle télescopique destinée à maintenir le capot ouvert dans les conditions de sécurité maximales, y compris dans les cas de fort vent (réglementation D.G.A.C., F.A.A., ...).

Sous sa forme la plus générale, l'invention concerne ainsi une combinaison d'une bielle télescopique d'ouverture d'un capot mobile de nacelle d'un moteur d'avion, et de ce capot mobile, ayant un bord articulé à un mât ou une autre pièce « fixe » du moteur ou de la nacelle et un bord inférieur équipé de moyens de verrouillage à la nacelle ou à un autre capot mobile de la nacelle, la bielle étant composée de tronçons comprenant un premier tronçon et un deuxième tronçon mutuellement coulissants munis de systèmes de verrouillage pouvant être mis en service pour une position d'extension de la bielle où le capot mobile est maintenu ouvert et d'un mécanisme de déverrouillage unique supprimant le service du système de verrouillage, caractérisée en ce que la bielle est constamment articulée au moteur et au bord inférieur du capot mobile par des extrémités opposées, que le mécanisme de déverrouillage possède une manette située près de l'extrémité articulée au bord inférieur du capot mobile.

On voit que la bielle, articulée à demeure au capot par une extrémité et au moteur par l'autre, ne nécessite aucune manipulation pendant l'ouverture du capot. La liaison de la bielle au bord d'ouverture du capot permet à l'opérateur soulevant le capot par ce bord d'ouverture d'atteindre sans difficulté la bielle pour la verrouiller, si du moins le verrouillage est manuel, ou pour la déverrouiller quand le capot doit être refermé. Une construction particulière de la bielle en deux tronçons de longueurs inégales peut permettre de l'articuler aux endroits indiqués, comme on le verra plus loin, quelle que soit la forme ou la cinématique d'ouverture du capôt.

Les avantages de l'invention ne peuvent pas être atteints par les systèmes de bielles où les mécanismes de déverrouillage sont éloignés de l'endroit d'articulation de la bielle au capot, ni par ceux dont l'endroit d'articulation de la bielle au capot est éloigné du bord inférieur de celui-ci. Un élément remarquable de l'invention est que le mécanisme de déverrouillage est séparé du système de verrouillage qui se trouve à la jonction des tronçons des bielles.

Concrètement, il est avantageux que le tronçon soit articulé au bord d'ouverture du capot mobile, le premier tronçon soit articulé au moteur et coulisse dans le second tronçon, et que le mécanisme de déverrouillage comprenne un tube coulissant sur le second tronçon et fixé à une manette de commande.

Un mécanisme de verrouillage et de déverrouillage particulièrement avantageux est obtenu si la manette est située immédiatement derrière le capot mobile, le tube coulissant comprend un réceptacle intérieur opposé à la manette, le tronçon est traversé par au minimum un perçage à une extrémité opposée au bord d'ouverture du capot mobile, le premier tronçon est creusé d'une gorge extérieure à une extrémité opposée au moteur, le mécanisme de verrouillage comprend encore un ressort disposé entre le second tronçon et le tube et éloignant la manette du capot, et des billes sont disposées dans les perçages tout en débordant soit dans le réceptacle, soit dans la gorge. Le bord articulé et le bord d'ouverture correspondent respectivement à un bord supérieur et à un bord inférieur dans la nacelle sous voilure dont la description suit, mais la jointure entre les capots peut être différente, par exemple avec un fuselage porteur des moteurs (MD 90 ou autre, où cette jointure est horizontale). L'invention s'appliquerait dans les mêmes conditions.

L'invention sera décrite plus en détail à l'aide des figures suivantes :
- la figure 1 est une vue de la nacelle en éclaté,
- la figure 2 est une vue plus détaillée d'un capot de soufflante classique en éclaté,
- la figure 3 illustre l'ouverture de ce capot de soufflante,

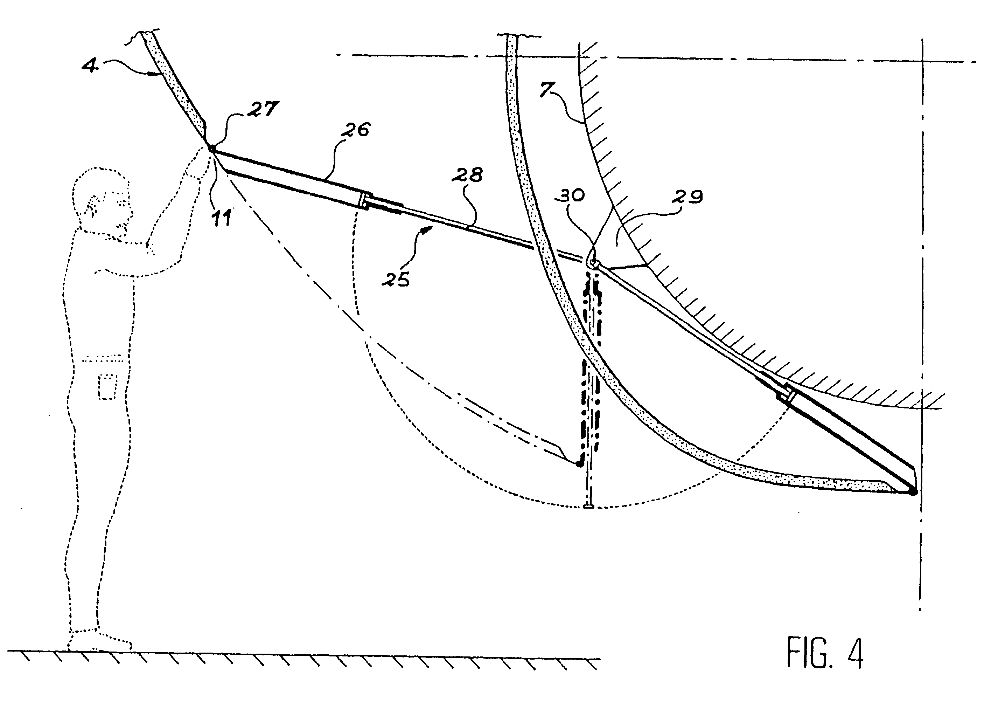

- la figure 4 illustre l'ouverture d'un capot de soufflante équipé de l'invention,
- la figure 5 est une vue détaillée de la bielle conforme à l'invention,
- la figure 6 est une vue de détail illustrant une phase de l'ouverture,
- la figure 7 est une vue d'une réalisation particulière de l'extrémité de la bielle,
- et la figure 8 est une vue, analogue à la figure 5, de la réalisation particulière de la figure 7.

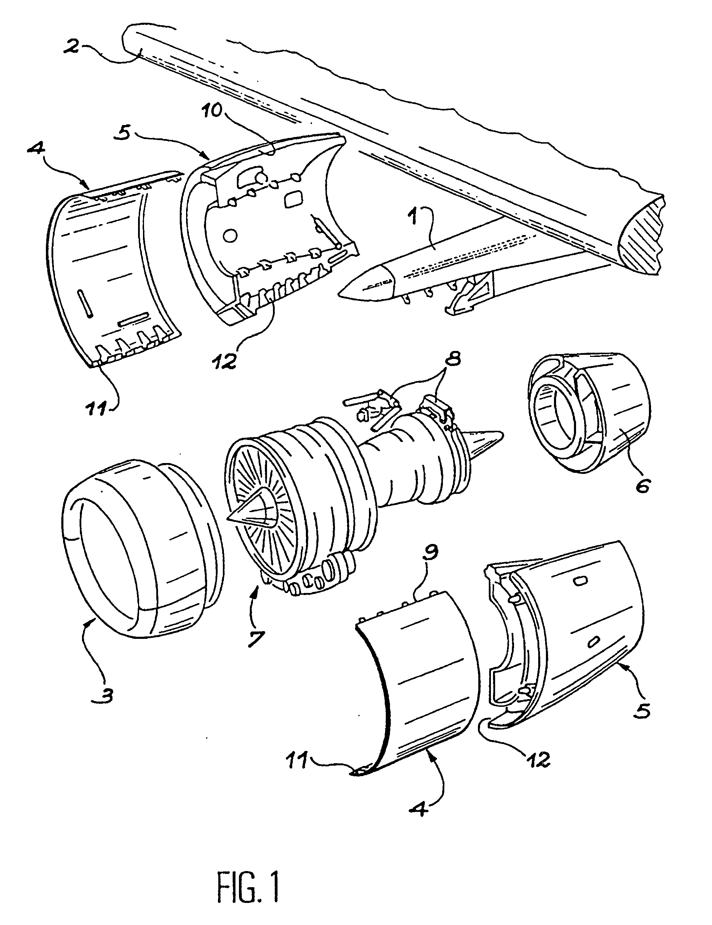

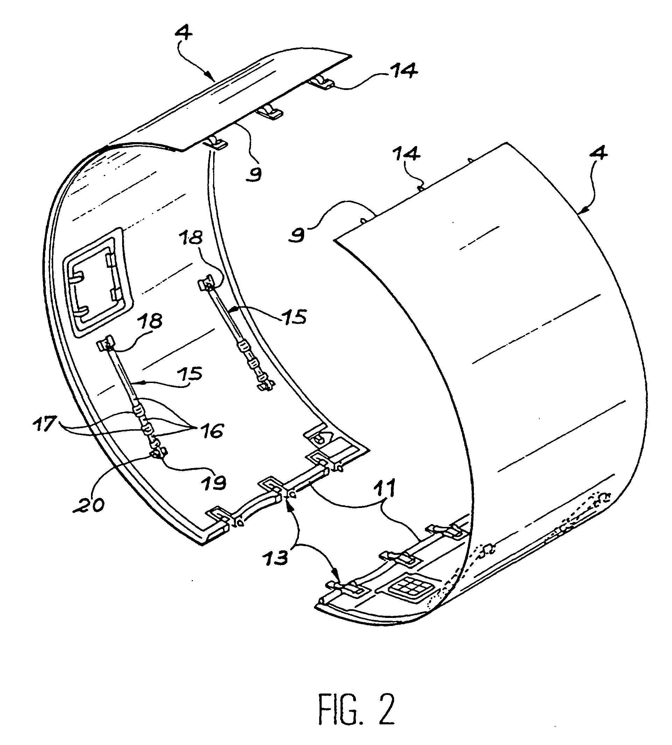

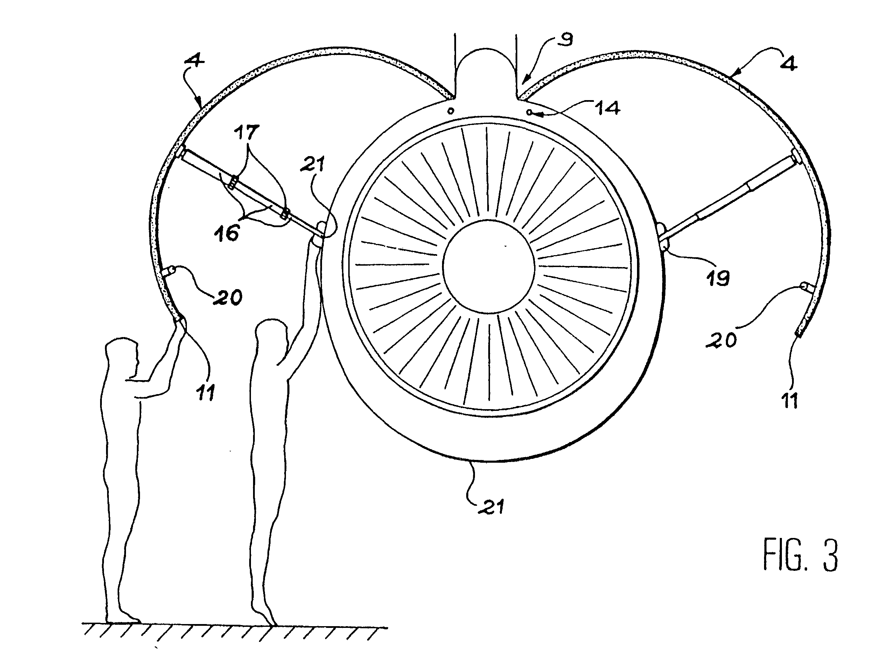

La figure 1 représente une nacelle existante pour un moteur d'avion. Cette enveloppe est suspendue à un mât 1 d'une aile d'avion 2 qui n'est qu'esquissée et elle se compose d'avant en arrière d'une entrée d'air 3 annulaire, d'une paire de capots de soufflante 4 à gauche et à droite, d'une paire de capots d'inverseur de poussée 5, encore à gauche et à droite, et d'une tuyère 6 annulaire. Le moteur 7 englobé dans la nacelle est suspendu au mât 1 par deux organes de montage 8 à l'avant et l'arrière. Les capots de soufflante 4 et d'inverseur de poussée 5 sont en forme d'arc de cercle et sont articulés par leurs bords supérieurs, respectivement 9 et 10, au reste de la nacelle près du mât 1, et leurs bords inférieurs 11 et 12 portent des moyens de verrouillage qui permettent d'assembler les capots de soufflante 4 entre eux et les capots d'inverseur de poussée 5 entre eux. Ces moyens de verrouillage sont représentés schématiquement à la figure 2 sous la référence 13. Ils ne sont pas décrits en détail car l'invention ne porte pas sur eux et ils ne sont pas modifiés, pas plus que les charnières 14 d'articulation du bord supérieur 9 ou 10 à la nacelle. Cette figure 2 est une vue en éclaté des capots de soufflante 4 sur lesquels l'invention sera implantée dans la réalisation particulière décrite ici, sans que d'autres endroits d'implantation soient exclus, mais les capots de soufflante 4 ont la particularité d'être plus légers que les capots d'inverseur de poussée 5 et de se prêter à une ouverture purement manuelle où des opérateurs doivent soulever les capots et s'occuper des bielles. Celles qui sont actuellement employées portent la référence 15 ; elles sont stockées et accrochées uniquement au capot durant le vol : il en existe une paire pour chacun des capots de soufflante 4, et on voit qu'elles sont composées d'un certain nombre de tronçons 16, trois par exemple, susceptibles de coulisser les uns dans les autres et reliés par des mécanismes de verrouillage 17 permettant de les retenir en position de déploiement. Les bielles 15 possèdent une extrémité supérieure 18 articulée au capot de soufflante 4 à mi-hauteur de celui-ci et une extrémité inférieure 19 façonnée en pince et retenue dans une poignée 20 du capot de soufflante 4. La figure 3 représente une étape finale d'ouverture du capot de soufflante 4 où un opérateur installe la pince 19 sur une poignée 21 du moteur 7 après l'avoir détachée de la poignée 20 du capot 4 et après avoir déployé les tronçons 16 et les avoir verrouillés. Un autre opérateur maintient le capot 4 soulevé.

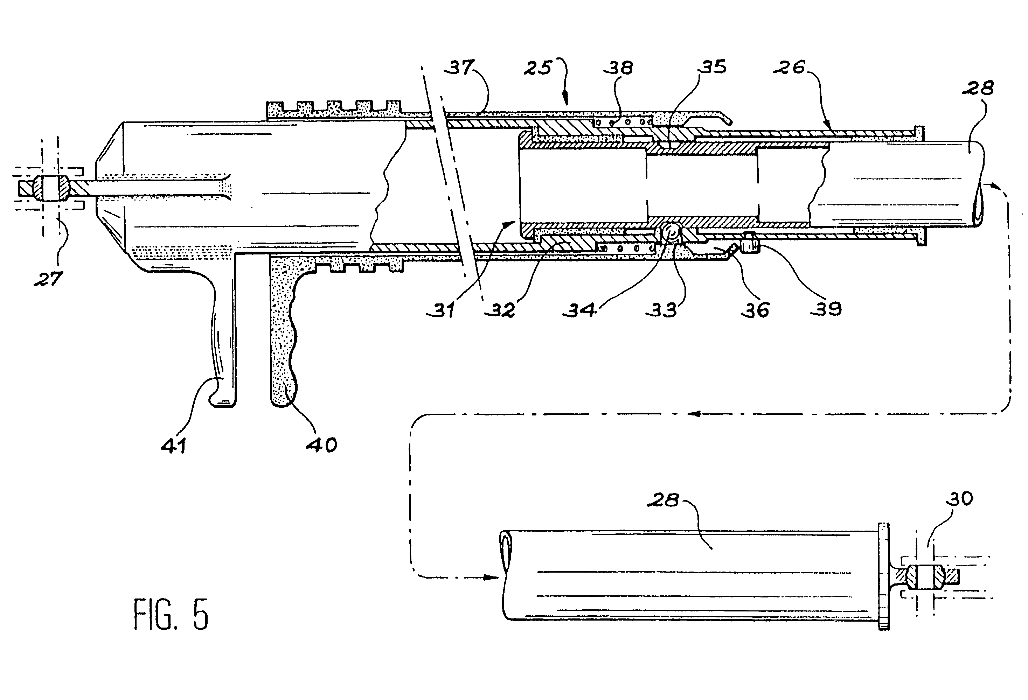

La bielle de l'invention, représenté sur les figures suivantes 4 et 5, porte la référence 25. Elle est composé d'un tronçon 26 dont l'extrémité distale est reliée par une articulation 27 au bord inférieur 11 du capot de soufflante 4 et d'un tronçon 28 dont l'extrémité distale est reliée à une patte 29 du moteur 7 par une articulation 30. Le tronçon 28 coulisse dans le tronçon 26, qui est creux sur toute sa longueur et présente donc des surfaces de glissement invariables pour le tronçon 28. La bielle 25 est entièrement déployée quand le capot 4 de soufflante est soulevé par l'opérateur à la position indiquée, et elle est alors verrouillée automatiquement de la façon indiquée plus loin. Elle est maintenue à un état de déploiement proche du verrouillage quand le capot de soufflante 4 est fermé, et elle se contracte au début de l'ouverture du capot de soufflante 4 jusqu'à un état (où elle est sensiblement verticale) où le tronçon 28 s'étend dans toute la longueur de tronçon 26 et en dépasse. Cette particularité est rendue nécessaire dans certains cas par la cinématique d'ouverture du capot de soufflante 4, qui fait passer le bord inférieur 11 très près de la patte d'articulation 29 et impose une rotation presque égale à un demi-tour à la bielle 25. Le dépassement du tronçon 28 est possible puisque l'articulation 27 du tronçon 26 est conçue pour que celui-ci s'étende devant le bord inférieur 11 du capot de soufflante 4, c'est-à-dire que sa direction ne coupe pas le capot 4, et que le tronçon 26 est ouvert à cet endroit. La composition de la bielle 25 en deux tronçons 26 et 28 seulement permet de les verrouiller automatiquement par un mécanisme unique dont la manette de commande de déverrouillage est adjacente à l'articulation 27 et peut donc être saisie sans difficulté par l'opérateur. C'est ce que représente la figure 5. Le déploiement de la bielle 25 est assuré quand une bague 31 du tronçon 28, opposée à l'articulation 29, bute contre un manchon 32 du tronçon 26 opposé à l'articulation 27. Ce manchon 32 est traversé par au minimum un perçage 33 dans lequel une bille 34 est logée. La bille 34 a cependant un diamètre plus grand que la profondeur du perçage 33 et en dépasse donc : elle peut s'étendre soit dans une gorge 35 établie dans le tronçon 28 soit dans un réceptacle 36 établi dans un tube 37 de commande coulissant autour du tronçon 26. Ce tube 37 peut être continu jusqu'à la poignée 41 telle que représentée ou local, au droit de la zone de verrouillage, et relié à la poignée 41 par tout système de tringle, tige, ... Dans le premier cas, représenté à la figure 5, les billes 34 maintiennent le verrouillage entre les tronçons 26 et 28 pour une position de déploiement de la bielle 25 ; le second cas est obtenu en faisant coulisser le tube 37 vers l'articulation 27 pour placer le réceptacle 36 devant les perçages 33 : les billes 34 tombent alors dans ce réceptacle 36 en quittant la gorge 35, ce qui libère les tronçons 26 et 28 et permet de replier la bielle 25.

Un ressort 38, comprimé entre le tronçon 26 et le tube 37, tend à éloigner celui-ci de l'articulation 27 et à le repousser sur une butée 39 du tronçon 26, à une position où le réceptacle 36 est décalé des perçages 33, ce qui maintient le verrouillage. La poussée du ressort peut cependant être vaincue si l'opérateur tire sur une manette 40 à l'autre extrémité du tube 37 (adjacente à l'articulation 27) pour commander le déverrouillage de la bielle 25. Il agrippe avantageusement à la fois cette manette 40 et une manette complémentaire 41 fixée au tronçon 26 et qui lui offre un appui.

Quand la bielle 25 n'est pas déployée, les billes 34 s'étendent dans le réceptacle 36 et le ressort 38 est maintenu à l'état comprimé. Les billes quittent le réceptacle 36 en occupant la gorge 35 dès que le déploiement est achevé, ce qui libère le tube 37 de commande, que le ressort 38 déplace jusqu'à la butée 39. Le mouvement du tube 37 et de la manette 40, voire le bruit produit alors, aident l'opérateur à s'apercevoir que le capot de soufflante 4 est complètement ouvert. Mais l'invention peut être utilisée avec une bielle sans verrouillage automatique pourvu que son mécanisme de commande soit accessible.

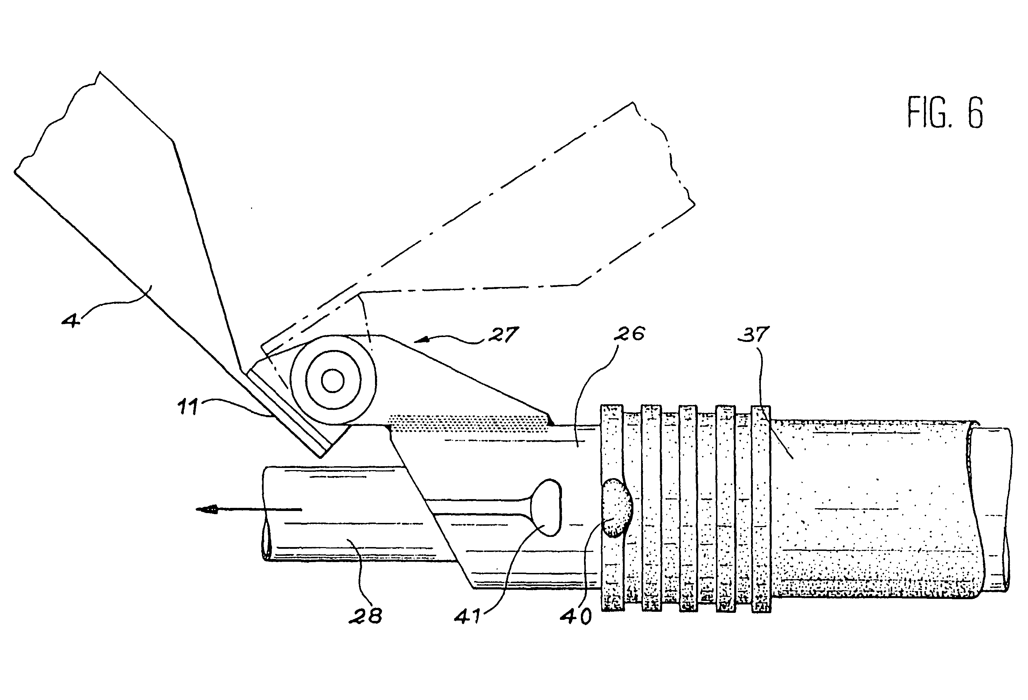

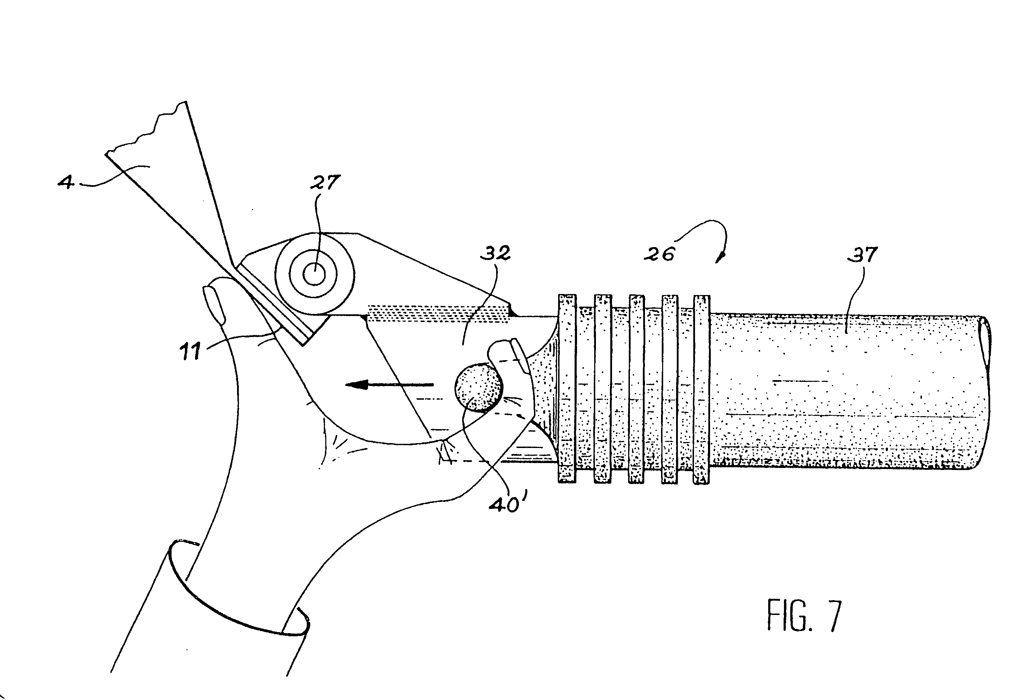

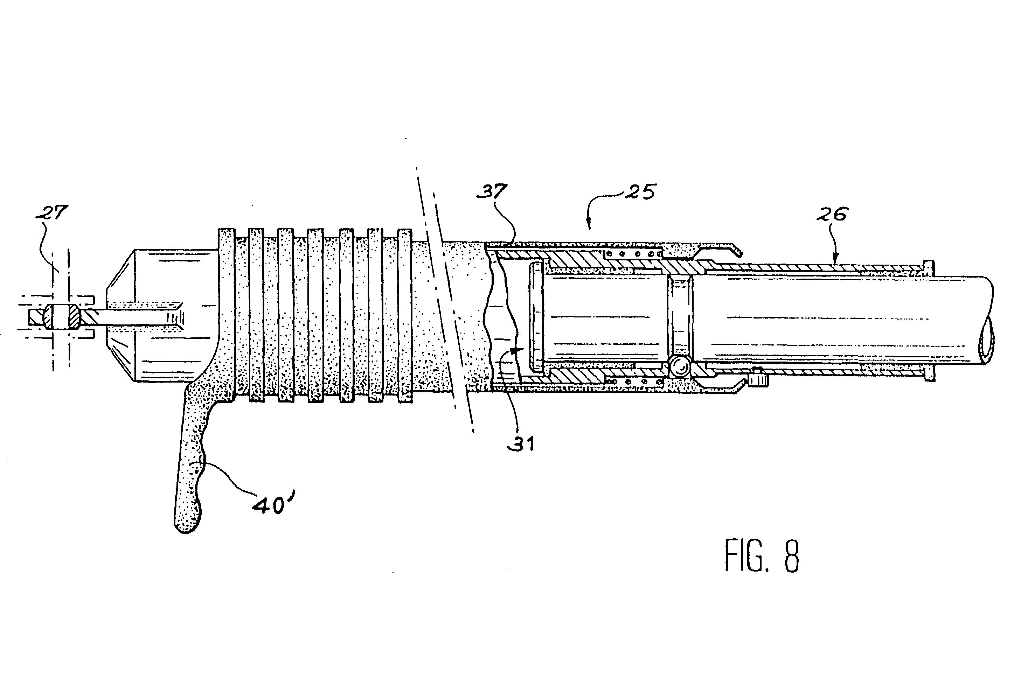

Si le tronçon 28 doit dépasser du tronçon 26, il est essentiel que la manette 40 soit placée latéralement sur le tube du tronçon 26, tout comme la manette complémentaire 41, afin de laisser dégagée l'ouverture à l'extrémité du tronçon 26 (figure 6). Une disposition avantageuse consiste par ailleurs à disposer la manette (40' sur les figures 7 et 8) de façon que l'opérateur puisse la saisir tout en tenant le capot de soufflante 4 de la même main : il faut alors que la manette 40' soit immédiatement adjacente au bord inférieur 11 qui est une prise du capot de soufflante 4, et plus précisément qu'elle n'en soit pas éloignée de plus d'un empan ; on préconise aussi de retirer tous les obstacles entre eux, ce qui peut amener à supprimer la manette complémentaire 41. Le reste de la bielle 25 n'est pas altéré, comme le montre la figure 8.

La bielle 25 se prête à l'ouverture automatique du capot de soufflante 4 même dans des conditions difficiles, en cas de fort vent par exemple : la tâche de l'opérateur peut alors même être facilitée, le vent pouvant aider à l'ouverture jusqu'au verrouillage automatique, sans qu'une action manuelle notable soit nécessaire.

## Revendications

1. Capot mobile (4) de nacelle d'un moteur (7) d'avion, le capot mobile ayant un bord supérieur (9) articulé à un mât ou un élément fixe de la nacelle et un bord inférieur (11) équipé de moyens de verrouillage (13) à la nacelle ou à un autre capot mobile (4) de la nacelle, comprenant une bielle télescopique composée de tronçons (26, 28) mutuellement coulissants munis de systèmes de verrouillage (33, 34, 35) pouvant être mis en service pour une position d'extension de la bielle (25) où le capot mobile (4) est maintenu ouvert et de mécanismes de déverrouillage (36, 37, 40) supprimant le service du système de verrouillage, **caractérisé en ce que** la bielle est constamment articulée au moteur (7) et au bord inférieur (11) du capot mobile (4) par des extrémités opposées (27, 30), qu'elle est composée d'un premier tronçon (28) et d'un second tronçon (26), le second tronçon étant façonné avec des surfaces de glissement pour le premier tronçon, et **en ce qu'**elle comprend un mécanisme de déverrouillage unique ayant une manette (40, 40') située près de l'extrémité (27) articulée au bord inférieur (11) du capot mobile (4).

2. Capot mobile selon la revendication 1, **caractérisé en ce que** le second tronçon (26) est articulé au bord inférieur (11), le premier tronçon (28) est articulé au moteur (7) et coulisse dans le second tronçon (26) et le mécanisme de déverrouillage comprend un tube coulissant (37) sur le second tronçon (26) et fixé à la manette (40).

3. Capot mobile selon la revendication 2, **caractérisé en ce que** la manette (40, 40') est située sur la bielle immédiatement derrière le capot mobile (4), le tube coulissant (37) comprend un réceptacle (36) intérieur opposé à la manette (40, 40'), le second tronçon (26) est traversé par au minimum un perçage (33) à une extrémité opposée au bord inférieur (11) du capot mobile, le premier tronçon (28) est creusé d'une gorge (35) extérieure à une extrémité opposée au moteur (7), le mécanisme de verrouillage comprend un ressort (38) disposé entre le second tronçon (26) et le tube (37) et éloignant la manette (40, 40') du capot (4), et des billes (34) sont disposées dans les perçages (33) tout en débordant soit dans le réceptacle (36), soit dans la gorge (35).

4. Capot mobile selon l'une quelconque des revendications 1 à 3, **caractérisé en ce que** les surfaces de glissement pour le premier tronçon (28) s'étendent sur toute la longueur du second tronçon (26), qui est ouvert à l'extrémité (27) articulée au bord inférieur (11) du capot mobile (4), les tronçons (26, 28) ayant des longueurs inégales de sorte que le premier tronçon (28) dépasse de l'extrémité (27) ouverte du second tronçon (26) sur une partie de la course d'ouverture du capot.

5. Capot mobile selon la revendication 4, **caractérisé en ce que** la manette (40) est située latéralement sur le second tronçon (26).

6. Capot mobile selon l'une quelconque des revendications 1 à 5, **caractérisé en ce que** la manette (40') est immédiatement adjacente au bord inférieur du capot.

7. Capot mobile selon l'une quelconque des revendications 1 à 6, **caractérisé en ce que** la bielle (25) se prête à un verrouillage automatique du capot, sans action sur la bielle (25).

## Patentansprüche

1. Bewegliche Haube (4) einer Flugzeug-Triebwerkverkleidung (7), wobei die bewegliche Haube einen oberen Rand (9) aufweist, der an einem Masten oder einem feststehenden Element der Triebwerkverkleidung angelenkt ist, und einen unteren Rand (11), der mit Mitteln (13) zum Verriegeln an der Triebwerkverkleidung oder an einer anderen beweglichen Haube (4) der Triebwerkverkleidung ausgestattet ist, umfassend eine Teleskopstange, die aus zueinander gleitenden Teilstücken (26,28) gebildet ist, welche mit Verriegelungssystemen (33,34,35) versehen sind, die für eine ausgefahrene Position der Stange (25) bedient werden können, bei der die mobile Haube (4) offen gehalten wird, und Entriegelungsmechanismen (36,37,40), welche die Bedienung des Verriegelungssystems verhindern, **dadurch gekennzeichnet, dass** die Stange ständig über entgegengesetzte Enden (27,30) am Triebwerk (7) und am unteren Rand (11) der beweglichen Haube (4) angelenkt ist, dass sie aus einem ersten Teilstück (28) und einem zweiten Teilstück (26) gebildet ist, wobei das zweite Teilstück mit Gleitflächen für das erste Teilstück ausgebildet ist, und dass sie einen einzigen Entriegelungsmechanismus mit einem nahe dem am unteren Rand (11) der beweglichen Haube (4) angelenkten Ende (27) befindlichen Bedienungselement (40,40') umfasst.

2. Bewegliche Haube nach Anspruch 1, **dadurch gekennzeichnet, dass** das zweite Teilstück (26) am unteren Rand (11) angelenkt ist, das erste Teilstück (28) am Triebwerk (7) angelenkt ist und im zweiten Teilstück (26) gleitet, und der Entriegelungsmechanismus ein Gleitrohr (37) am zweiten Teilstück (26), das am Bedienungselement (40) befestigt ist, umfasst.

3. Bewegliche Haube nach Anspruch 2, **dadurch gekennzeichnet, dass** sich das Bedienungselement (40,40') an der Stange unmittelbar hinter der beweglichen Haube (4) befindet, wobei das Gleitrohr (37) eine innere Ausnehmung (36) gegenüber dem Bedienungselement (40,40') umfasst, das zweite Teilstück (26) mindestens von einer Bohrung (33) an einem entgegengesetzten Ende zum unteren Rand (11) der beweglichen Haube durchsetzt ist, das erste Teilstück (28) mit einer äußeren Nut bzw. Rille (35) an einem zum Triebwerk (7) entgegengesetzten Ende versehen ist, der Verriegelungsmechanismus eine zwischen dem zweiten Teilstück (26) und dem Rohr (37) angeordnete Feder (38) umfasst, welcher das Bedienungselement (40,40') von der Haube (4) entfernt hält, und Kugeln (34) in den Bohrungen (33) angeordnet sind und dabei entweder in die Ausnehmung (36) oder in die Nut bzw. Rille (35) vorstehen.

4. Bewegliche Haube nach einem der Ansprüche 1 bis 3, **dadurch gekennzeichnet, dass** sich die Gleitflächen für das erste Teilstück (28) über die gesamte Länge des zweiten Teilstücks (26) erstrecken, welches an dem am unteren Rand (11) der beweglichen Haube (4) angelenkten Ende (27) offen ist, wobei die Teilstücke (26,28) ungleiche Längen aufweisen, so dass das erste Teilstück (28) über das offene Ende (27) des zweiten Teilstücks (26) auf einem Abschnitt des Öffnungswegs der Haube hinaussteht.

5. Bewegliche Haube nach Anspruch 4, **dadurch gekennzeichnet, dass** sich das Bedienungselement (40) lateral an dem zweiten Teilstück (26) befindet.

6. Bewegliche Haube nach einem der Ansprüche 1 bis 5, **dadurch gekennzeichnet, dass** das Bedienungselement (40') unmittelbar an den unteren Rand der Haube angrenzt.

7. Bewegliche Haube nach einem der Ansprüche 1 bis 6, **dadurch gekennzeichnet, dass** die Stange (25) für eine automatische Verriegelung der Haube ohne Betätigung der Stange (25) geeignet ist.

## Claims

1. A telescopic bar (25) for opening a movable cover (4) on an aircraft engine nacelle (7), the movable cover having a top edge (9) hinged on a mast or fixed element of the nacelle, and a bottom edge (11) equipped with means (13) of locking on the nacelle or on another movable cover (4) on the nacelle, the bar being composed of sections comprising mutually sliding first and second sections (26, 28) provided with locking systems (33, 34, 35) able to be brought into service for an extension position of the bar (25) in which the movable cover (4) is held open and unlocking mechanisms (36, 37, 40) overriding the service of the locking system, **characterised in that** it is permanently hinged on the engine (7) and on the bottom edge (11) of the movable cover at opposite ends (27, 30), **in that** it is composed of a first section (28) and a second section (26), the second section being fashioned with sliding surfaces for the first section, and **in that** it comprises a single unlocking mechanism having a handle (40, 40') situated close to the end (27) articulated on the bottom edge (11) of the movable cover (4).

2. A telescopic bar according to Claim 1, **characterised in that** the second section (26) is hinged on the bottom edge (11) of the movable cover (4), the first section (28) is hinged on the engine (7) and slides in the second section (26) and the unlocking mechanism comprises a tube (37) sliding on the second section (26) and fixed to the handle (40).

3. A telescopic bar according to Claim 2, **characterised in that** the handle (40, 40') is situated immediately behind the movable cover (4), the sliding tube (37) comprises an internal receptacle (36) opposite the handle (40, 40'), the second section (26) has at a minimum one drilling (33) passing through it at an end opposite the bottom edge (11) of the movable cover, the first section (28) has an external groove (35) in it at an end opposite the engine (7), the locking mechanism comprises a spring (38) disposed between a second section (26) and the tube (37) and moving the handle (40, 40') away from the cover (4), and balls (34) are disposed in the drillings (33) whilst projecting either into the receptacle (36) or into the groove (35).

4. A telescopic bar according to any one of Claims 1 to 3, **characterised in that** the sliding surfaces for the first section (28) extend over the entire length of the second section (26), which is open at the end (27) hinged on the bottom edge (11) of the movable cover (4), the sections (26, 28) having unequal lengths so that the first section (28) projects from the open end (27) of the second section (26) over a part of the opening travel of the cover.

5. A telescopic bar according to Claim 4, **characterised in that** the handle (40) is situated laterally on the second section (26).

6. A telescopic bar according to any one of Claims 1 to 5, **characterised in that** the handle (40') is immediately adjacent to the bottom edge of the cover.

7. A telescopic bar according to any one of Claims 1 to 6, **characterised in that** it allows an automatic locking of the cover, without any action on the bar (25).
